# FASCICULE DE BREVET EUROPEEN

(11) **EP 1 751 641 B1**
(45) Date de publication et mention de la délivrance du brevet: **03.12.2008**
(21) Numéro de dépôt: 05770866.1
(22) Date de dépôt: 12.05.2005
(51) Int. Cl.: G05D 23/13

(54) **CARTOUCHE THERMOSTATIQUE DE REGULATION DE FLUIDES CHAUD ET FROID A MELANGER, AINSI QUE ROBINET MITIGEUR MUNI D'UNE TELLE CARTOUCHE**
THERMOSTATKARTUSCHE ZUR REGELUNG VON ZU MISCHENDEN HEISSEN UND KALTEN FLÜSSIGKEITEN UND MISCHARMATUR MIT DERARTIGER KARTUSCHE
THERMOSTATIC CARTRIDGE FOR THE REGULATION OF HOT AND COLD FLUIDS TO BE MIXED, AND MIXER TAP COMPRISING ONE SUCH CARTRIDGE

(30) Priorité: 18.05.2004 FR 0405417
(43) Date de publication de la demande: 14.02.2007
(73) Titulaire: VERNET S.A., 91291 Arpajon Cédex (FR)
(72) Inventeur: MACE, Christian, F-91680 Bruyeres le Chatel (FR); LE CLANCHE, Gérard, F-91210 DRAVEIL (FR)
(74) Mandataire: Blot, Philippe Robert Emile
(86) Numéro de dépôt international: PCT/FR2005/001192
(87) Numéro de publication internationale: WO 2005/124495

(56) Documents cités:
- CA-C- 2 196 228
- FR-A- 2 821 411
- US-B1- 6 279 831
- US-B1- 6 325 295

## Description

La présente invention concerne une cartouche thermostatique de régulation de fluides chaud et froid à mélanger, notamment une cartouche à commandes de débit et de température concentriques, en particulier de type à quart de tour. Elle concerne également un robinet mitigeur comportant une telle cartouche.

La plupart des robinets actuels à disques en céramique ne permettent pas de stabiliser efficacement la température du fluide de sortie, dit « fluide mélangé » ou « mitigé », quand la pression et/ou la température de l'un au moins des fluides d'entrée, dits « fluide froid » et « fluide chaud »,varient. On a donc proprosé pour ces robinets des cartouches équipées d'un élément thermostatique destiné à réguler la température du fluide mélangé.

FR-A-2 821 411 décrit une cartouche thermostatique de ce type, dite à commandes concentriques, c'est-à-dire une cartouche destinée à équiper un robinet comportant deux manettes concentriques pour les commandes respectives du débit et de la température du fluide mélangé. La régulation de la température est assurée par un tiroir solidarisé à un élément thermostatique tandis que le réglage du débit est assuré par deux disques en céramique accolés l'un à l'autre de façon mobile, l'un de ces disques étant lié en rotation à un organe de commande solidaire de la manette de commande du débit tandis que l'autre, lié au boîtier de la cartouche, est fixe en rotation. Chaque disque délimite un passage de montée du fluide chaud, un passage de montée du fluide froid et un passage de descente du mélange des fluides chaud et froid. La partie thermosensible de l'élément thermostatique de régulation est disposée sur le trajet d'écoulement du mélange des fluides chaud et froid. Pour améliorer la qualité et/ou la rapidité de la régulation thermostatique, cette cartouche est équipée d'un organe fixe de création de turbulences, couramment appelé « turbulateur », qui perturbe le flux du mélange autour de la partie thermosensible de manière à augmenter ses turbulences pour homogénéiser le mélange, ainsi que la vitesse locale de l'écoulement à la surface de cette partie thermosensible.

Cependant, la présence de ce turbulateur restreint les capacités d'évacuation du mélange en sortie de la cartouche et impose donc une limitation du débit en pleine ouverture du robinet. A l'inverse, pour de faibles débits, le turbulateur ne garantit pas que le mélange présente une température homogène, ni qu'il s'écoule le long de la partie thermosensible de l'élément thermostatique. Autrement dit, le dimensionnement du turbulateur résulte d'un compromis entre la régulation thermostatique escomptée à faible débits et le débit maximal admissible par la cartouche.

Le document US 6 279 831 B1 divulgue une autre cartouche thermostatique de l'art antérieur.

Le but de l'invention est de proposer une cartouche thermostatique du type évoqué ci-dessus, qui permet la création de turbulences de façon globalement analogue à un turbulateur fixe de l'art antérieur, mais ce autant pour de faibles débits que pour des débits plus élevés, voire pour un débit maximal supérieur à celui admis par une cartouche de l'art antérieur.

A cet effet, l'invention a pour objet une cartouche thermostatique de régulation de fluides chaud et froid à mélanger, comprenant :
- un boîtier,
- un organe de commande du débit du mélange des fluides chaud et froid,
- deux éléments de réglage des débits des fluides chaud et froid, qui comportent chacun un passage du fluide chaud, un passage du fluide froid et un passage du mélange des fluides chaud et froid et qui sont accolés l'un à l'autre de façon mobile, l'un des éléments étant lié en rotation à l'organe de commande de débit et l'autre étant lié en rotation au boîtier, et
- des moyens de régulation thermostatique qui comportent un élément thermostatique dont la partie thermosensible est située sur le trajet d'écoulement du mélange,
caractérisée en ce que la section d'écoulement du mélange des fluides chaud et froid à travers les éléments de réglage, définie par la superposition des passages du mélange dans la zone d'accolememt des éléments de réglage, est variable en fonction de la configuration de l'organe de commande de débit et en ce que, suivant la dimension de la partie thermosensible globalement parallèle à la direction d'écoulement du mélange autour de cette partie, au moins la moitié environ de ladite partie thermosensible est située en aval de la zone d'accolement des éléments de réglage.

La cartouche selon l'invention dispose ainsi en quelque sorte d'un turbulateur à géométrie variable, autour ou en amont de la partie thermosensible de l'élément thermostatique. En effet, le recouvrement des éléments de réglage accolés l'un à l'autre conduit à une section d'écoulement du mélange qui varie en fonction de la configuration de l'organe de commande de débit, c'est-à-dire en fonction du débit de sortie commandée à la cartouche. Lorsque ce débit est faible, les passages du mélange sont en communication fluidique selon une petite proportion de l'un des ou des deux passages de manière à ce que l'écoulement de cette faible quantité de fluide mélangé soit suffisamment perturbé pour présenter une température globalement homogène et soit, de préférence, canalisé le long de la partie thermosensible de l'élément thermostatique, ce qui assure une bonne régulation thermostatique, tandis que pour un débit plus important, voire un débit en pleine ouverture du robinet, les passages du mélange sont davantage en communication fluidique, voire totalement, pour ne pas gêner l'écoulement de cette grosse quantité de mélange. La cartouche selon l'invention présente ainsi un meilleur compromis régulation thermostatique/débit que les cartouches de l'art antérieur.

Suivant d'autres caractéristiques de cette cartouche, prises isolément ou selon toutes les combinaisons techniquement possibles :
- au moins les trois quarts de la partie thermosensible sont situés en aval de la zone d'accolement des deux éléments de réglage ;
- la partie thermosensible de l'élément thermostatique est disposée au moins partiellement en travers des deux passages du mélange ;
- l'espace entre la partie thermosensible et les parois délimitant respectivement les deux passages du mélange est totalement libre ;
- lorsque l'organe de commande de débit passe d'une première configuration de commande d'un premier débit, éventuellement nul, à une seconde configuration de commande d'un second débit supérieur au premier débit, la section d'écoulement du mélange augmente et, lorsque l'organe de commande de débit passe de la seconde à la première configuration, cette section diminué ;
- les éléments de réglage sont des disques accolés l'un à l'autre par une de leurs faces respectives, la zone d'accolement formant un plan sensiblement perpendiculaire à la direction d'écoulement du mélange dans leur passage du mélange ;
- chaque passage du mélange présente la forme d'un cercle tronqué de deux cordes sensiblement symétriques par rapport au centre de ce cercle, la distance entre ces deux cordes étant de préférence sensiblement égale à la dimension de la partie thermosensible transversale à la direction d'écoulement du mélange autour de cette partie ;
- les passages du mélange sont délimités directement par les éléments de réglage correspondants ;
- les passages du mélange sont délimités par des pièces respectivement rapportées de manière fixe sur les éléments de réglage correspondants.

L'invention a également pour objet un robinet mitigeur muni d'une cartouche thermostatique telle que définie ci-dessus.

Ce robinet présente, par rapport aux robinets de l'art antérieur, une meilleure régulation thermostatique à faibles débits et admet un débit maximal plus important, à dimensions de cartouches équivalentes.

L'invention sera mieux comprise à la lecture de la description qui va suivre, donnée uniquement à titre d'exemple et faite en se référant aux dessins sur lesquels :
- les figures 1A et 1B sont des coupes longitudinales schématiques d'une cartouche thermostatique selon l'invention, prises suivant le même plan de coupe, illustrant le fonctionnement de la cartouche avec des débits respectifs nul et maximal, c'est-à-dire illustrant respectivement la cartouche en configuration fermée et en configuration de pleine ouverture ;
- la figure 2 est une vue en élévation, prise suivant la flèche II indiquée à la figure 1A, du disque mobile de la cartouche, considéré isolément ;
- la figure 3 est une vue analogue à la figure 2, représentant le disque fixe de la cartouche ; et
- les figures 4A et 4B sont des coupes suivant les plans respectifs A-A et B-B aux figures 1A et 1B, seuls les disques des figures 2 et 3 et l'élément thermostatique de la cartouche étant représentés.

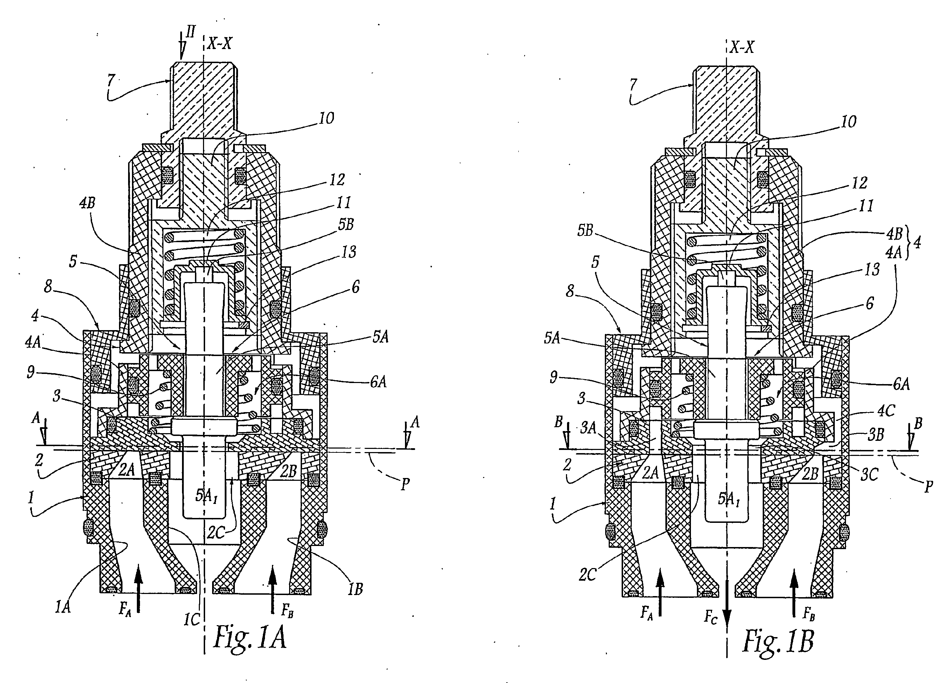

Sur les figures 1A et 1B est représentée une cartouche thermostatique agencée autour et le long d'un axe central X-X. Cette cartouche est adaptée pour équiper un robinet mitigeur d'eau chaude et d'eau froide.

Cette cartouche comporte un boîtier extérieur 1 délimitant dans sa base un conduit excentré 1A d'entrée d'eau chaude, un conduit excentré 1B d'entrée d'eau froide et un conduit central 1C de sortie du mélange des eaux chaude et froide, ces conduits s'étendant globalement parallèlement à l'axe X-X. La partie supérieure du boîtier 1 reçoit à la fois :
- un disque inférieur 2 en céramique, centré sur l'axe X-X et lié en rotation au boîtier 1 de manière étanche,
- un disque supérieur 3 en céramique, centré sur l'axe X-X et dont la face inférieure est accolée à la face supérieure du disque 2 suivant un plan d'accolement P,
- une partie inférieure 4A d'une manette 4 de commande du débit d'eau mélangée, cette partie 4A étant liée en rotation au disque 3,
- un élément thermostatique 5 à cire dilatable, de forme globale cylindrique à base circulaire, centrée sur l'axe X-X, et
- un tiroir 6 de régulation thermostatique, monté coulissant et de manière étanche à l'intérieur de la partie 4A de l'organe 4 et solidarisé, par exemple par vissage, au corps 5A de l'élément thermostatique 5.

L'organe de commande de débit 4 présente une partie supérieure 4B à l'intérieur de laquelle sont logés un organe 7 de commande de la température d'eau mélangée et une vis 10 de réglage de cette température, à la fois liée en rotation à l'organe 4 et liée à la façon d'un système vis-écrou à l'organe 7.

L'organe 4 et l'organe 7 sont adaptés pour être solidarisés à respectivement une manette de commande de débit et une manette de commande de température, ces manettes, non représentées, appartenant au robinet mitigeur.

Le boîtier 1 est, à son extrémité supérieure, fermé hermétiquement par un bouchon 8 qui enserre de manière étanche la partie supérieure 4B de l'organe 4. Cet organe 4 est ainsi bloqué en translation par rapport au boîtier, mais libre de tourner autour de l'axe X-X, de préférence sur environ un quart de cercle, entre une position de fermeture, représentée à la figure 1A, dans laquelle le débit d'eau mélangée est nul et une position de pleine ouverture, représentée à la figure 1B, dans laquelle le débit d'eau mélangée correspond au débit maximal admissible par la cartouche.

L'élément thermostatique 5 comporte un piston 5B dont l'extrémité libre est en contact permanent avec un appui de sur-course 11 en forme de cloche. En l'absence de sur-course du piston 5B, un ressort de compression 12, interposé axialement entre la vis 10 et l'appui 11, maintient cet appui contre une rondelle d'arrêt 13 de sorte que la position du piston le long de l'axe X-X est fixe. Ainsi, lorsque l'élément thermostatique 5 s'allonge et que l'altitude du piston 5B est maintenue fixe par le ressort 12, le corps 5A de cet élément se déplace en translation suivant l'axe X-X et déplace de manière correspondante le tiroir 6 entre la face supérieure du disque supérieur 3 et la face inférieure de la partie supérieure 4B de l'organe 4. Un ressort 9 de rappel du tiroir est interposé entre la face supérieure du disque 3 et le tiroir.

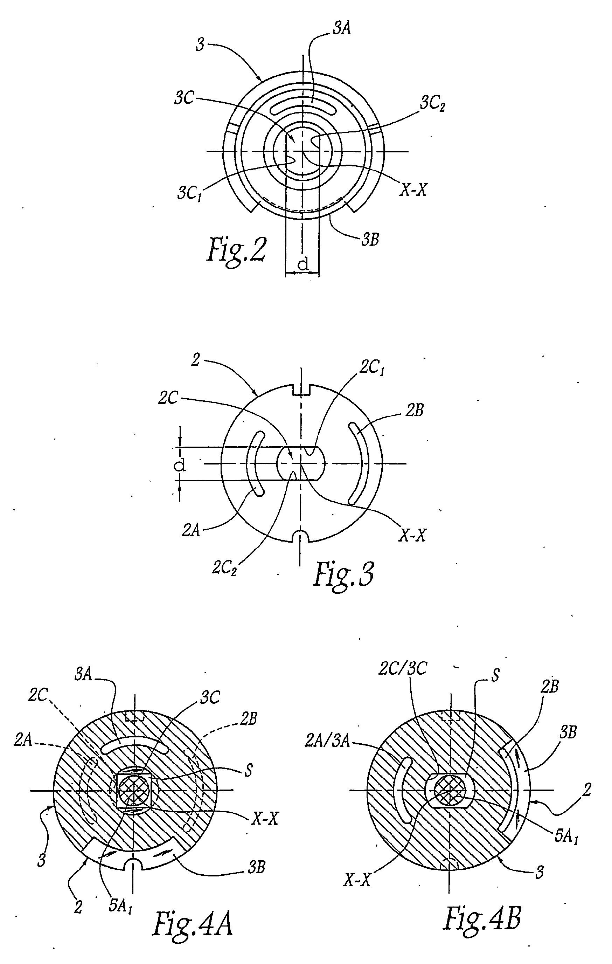

Comme représenté aux figures 1A, 1B et 3, le disque inférieur 2 délimite, en regard des conduits d'entrée d'eau chaude 1A, d'entrée d'eau froide 1B et de sortie d'eau mélangée 1C, des passages respectifs d'entrée d'eau chaude 2A, d'entrée d'eau froide 2B et de sortie d'eau mélangée 2C. Les passages d'entrée 2A et 2B s'étendent en arcs de cercles centrés sur l'axe X-X, respectivement de part et d'autre de l'axe X-X tandis que le passage de sortie 2C est globalement centré sur l'axe X-X.

Le disque supérieur 3 comporte lui aussi un passage d'entrée d'eau chaude 3A, un passage d'entrée d'eau froide 3B et un passage de sortie d'eau mélangée 3C, comme représenté aux figures 1A, 1B et 2. Les passages d'eau chaude 3A et d'eau froide 3B s'étendent en arcs de cercles centrés sur l'axe X-X, respectivement de part et d'autre de l'axe X-X, avec des rayons respectifs sensiblement égaux à ceux des passages d'entrée 2A et 2B. A la différence des passages d'entrée 2A, 2B et 3A, le passage 3B débouche, sur toute la longueur de son arc, à la périphérie du disque 3 pour constituer un passage latéral d'eau froide permettant l'écoulement de l'eau froide radialement vers l'extérieur du disque.

La cartouche représentée présente ainsi une structure d'ensemble analogue à celle de la cartouche décrite dans FR-2 821 411 de sorte qu'elle ne sera pas décrite ici plus avant en ce qui concerne ses aménagements communs avec la cartouche du document précité auquel le lecteur pourra se reporter.

Selon l'invention, les passages de sortie 2C et 3C ne présentent pas, en coupe transversale, une forme rigoureusement circulaire centrée sur l'axe X-X mais définissent chacun un contour formé d'un cercle tronqué d'une paire de cordes 2C₁, 2C₂ et 3C₁, 3C₂ sensiblement symétriques par rapport au centre de ce cercle. Dans l'exemple représenté, les géométries respectives des passages 2C et 3C sont sensiblement identiques. Pour chaque disque 2 et 3, la distance radiale d séparant les parois rectilignes 2C₁ et 2C₂, respectivement 3C₁ et 3C₂, est sensiblement égale, à des jeux fonctionnels près, au diamètre de la partie thermosensible 5A₁ du corps 5A de l'élément thermostatique 5, cette partie thermosensible 5A₁ étant, à l'état assemblé de la cartouche, disposée en travers des orifices 2C et 3C, indépendamment de la position des disques 2 et 3. Comme représenté aux figures 4A et 4B détaillées ci-après, la superposition plus ou moins étendue des passages 2C et 3C définit ainsi la section S d'écoulement d'eau mélangée à travers les disques 2 et 3, qui, d'un point de vue géométrique, correspond à l'intersection des sections transversales de ces passages 2C et 3C dans le plan P, soustraite de la section transversale de la partie thermosensible 5A₁ de l'élément thermostatique 5.

Lorsque la cartouche est dans sa configuration de fermeture des figures 1A et 4A, les disques 2 et 3 sont positionnés l'un par rapport à l'autre de manière à ce qu'aucune communication fluidique ne soit établie entre les passages d'eau chaude 2A et 3A et entre les passages d'eau froide 2B et 3B. Le débit en sortie de la cartouche est donc nul. Dans cette configuration, les passages de sortie 2C et 3C sont partiellement en communication fluidique, comme représenté à la figure 4A, bien qu'aucun fluide ne les traverse en pratique puisque les entrées de l'eau chaude et de l'eau froide sont obturées. On entend ici qu'une zone du passage 2C et une zone du passage 3C sont en communication fluidique lorsque ces deux zones se recouvrent l'une l'autre suivant une direction parallèle à l'axe X-X, ce qui revient à dire que ces deux zones sont dans le prolongement l'une de l'autre suivant cette direction sans interposition de matière. Les parois rectilignes 2C₁ et 2C₂ s'étendent alors dans des plans respectifs perpendiculaires aux plans contenant respectivement les parois rectilignes 3C₁ et 3C₂. Autrement dit, la section S d'écoulement d'eau mélangée à travers les disques 2 et 3 correspond, dans le plan P, à un carré de côté d, centré sur l'axe X-X, soustrait de la section transversale de la partie 5A₁ de l'élément thermostatique 5.

Lorsque la cartouche est dans sa configuration de pleine ouverture des figures 1B et 4B, de l'eau chaude entre dans la cartouche par le conduit 1A du boîtier 1, comme indiqué par la flèche F_{A}, parcourt les passages 2A et 3A des disques 2 et 3, se répand dans un canal annulaire défini entre le disque 3, l'organe 4 et le tiroir 6, passe par l'espace entre le disque 3 et le tiroir et parvient à l'intérieur du tiroir 6, au niveau de la base d'une chambre interne 6A de ce tiroir. Simultanément, de l'eau froide entre dans la cartouche par le conduit 1B, comme indiqué par la flèche F_{B}, parcourt les passages 2B et 3B des disques 2 et 3 et, après être sortie radialement du passage latéral 3B du disque 3, se répand dans un canal annulaire 4C défini entre, d'une part, la partie inférieure 4A de l'organe 4 et, d'autre part, le boîtier 1 puis le bouchon 8 pour atteindre la partie haute du tiroir 6 et passer par l'espace entre ce tiroir et la partie supérieure 4B de l'organe 4 avant de pénétrer dans la partie supérieure de la chambre 6A. Le mélange de l'eau chaude et de l'eau froide commence à l'intérieur de la chambre 6A et se poursuit à l'intérieur des passages 2C et 3C qui s'étendent de manière symétrique par rapport au plan d'accolement P et qui sont donc totalement en communication fluidique. Autrement dit, la totalité du passage 3C est en communication fluidique avec la totalité du passage 2C et la section S d'écoulement d'eau mélangée est donc égale à la totalité de la section transversale du passage 3C, elle même égale à celle du passage 2C, soustraite de la section de la partie 5A₁ de l'élément thermostatique 5. En aval du plan P, l'eau mélangée s'écoule autour de la partie thermosensible 5A₁ de l'élément thermostatique 5 puis est évacuée par le conduit 1C, comme indiqué par la flèche F_{c}.

Entre les configurations de fermeture totale et de pleine ouverture de la cartouche, le réglage du débit est obtenu par une rotation de l'organe de commande de débit 4, par le biais de la manette correspondante du robinet, qui entraîne une rotation du disque 3 définissant la position angulaire de ce disque par rapport au disque 2 et ainsi la section d'écoulement pour l'eau chaude résultant de la superposition plus ou moins étendue des passages 2A et 3A, ainsi que la section d'écoulement pour l'eau froide résultant de la superposition plus ou moins étendue des passages 2B et 3B. Les formes de ces passages 2A, 3A, 2B et 3B sont adaptées pour que les sections d'écoulement d'eau chaude et d'eau froide soit égales quelle que soit la position angulaire relative entre les deux disques, ces sections d'écoulement variant de la fermeture totale à une ouverture maximale.

De la même façon, la position angulaire du disque 3 par rapport au disque 2 détermine également la section S d'écoulement d'eau mélangée qui varie entre sa valeur de la figure 4A et sa valeur de la figure 4B, en passant ainsi continûment d'un minimum à un maximum. On le comprend bien en comparant les figures 4A et 4B puisque pour passer de l'une à l'autre de ces figures, le disque 3 est à déplacer en rotation autour de l'axe X-X d'un quart de tour par rapport au disque fixe 2.

Les formes des passages 2C et 3C sont avantageusement adaptées pour que la section S d'écoulement d'eau mélangée résultant de la superposition plus ou moins étendue des passages 2C et 3C soit sensiblement égale à la somme des sections des écoulements entrants d'eau chaude et d'eau froide, quelle que soit la position angulaire relative entre les deux disques. De la sorte, la superposition des passages 2C et 3C ne freine pas de manière significative l'écoulement du mélange sortant de la cartouche.

Dans la mesure où seulement une partie du passage 3C est en communication fluidique avec le passage 2C lorsque la cartouche n'est pas en configuration de pleine ouverture, des turbulences sont crées au sein de l'eau mélangée lorsque celle-ci traverse le plan d'accolement P des disques 2 et 3. Au niveau de ce plan P, les turbulences créées homogénisent la température de l'eau mélangée tandis qu'en aval du plan P, la forme non circulaire des passages 2C et 3C canalise l'eau mélangée de manière à ce qu'elle s'écoule le long de la partie thermosensible 5A₁. Pour que la sollicitation thermique de l'élément thermostatique 5 soit efficace, il est important que, comme représenté, l'essentiel de la partie thermosensible 5A₁ soit disposée, suivant l'écoulement F_{c}, c'est-à-dire suivant l'axe X-X, en aval de la zone de création des turbulences, autrement dit en aval du plan d'accolement P.

La position du plan d'accolement P le long de la partie thermosensible 5A₁, suivant la direction d'écoulement FC, n'est cependant pas limitée à celle représentée aux figures 1A et 1B. La zone d'accolement peut être située plus en aval mais, pour garantir un effet de turbulation suffisant, au moins la moitié environ de cette partie thermosensible doit être située en aval du plan d'accolement P, de préférence au moins les trois quart.

Par ailleurs, comme la distance d est sensiblement égale au diamètre de la partie thermosensible 5A₁, aucun organe ne peut être disposé autour de cette partie thermosensible au niveau du plan d'accolement P, un tel organe ayant tendance à créer en aval une retenue pour l'écoulement d'eau mélangée et risquant d'annuler l'effet de turbulation recherché.

Comme expliqué dans le document FR-2 821 411, lorsque la température de l'eau mélangée augmente autour de la partie thermosensible 5A₁, l'élément thermostatique 5 s'allonge et le tiroir 6 régule la température de l'eau mélangée en diminuant la quantité d'eau chaude admise dans la chambre 6A et en augmentant celle d'eau froide. Le réglage de la température autour de laquelle est commandée cette régulation est obtenu par la rotation de l'organe de commande de température 7 qui entraîne la vis 10 et donc déplace en translation le long de l'axe X-X l'altitude du piston 5B. Par ailleurs, s'il survient une coupure d'eau froide, tout risque de brûlure est évité par une fermeture automatique de l'eau chaude, le ressort de sur-course 12 étant alors comprimé par le déplacement important du piston 5B.

Divers aménagements et variantes à la cartouche décrite ci-dessus sont en outre envisageables :
- plutôt que les passages 2C et 3C soient directement délimités par les disques 2 et 3, ces passages peuvent être délimités par des pièces respectivement portées de manière fixe sur ces disques ; il peut être par exemple prévu que chaque disque délimite un orifice central sensiblement circulaire et que des pièces portant les parois rectilignes 2C₁, 2C₂ et 3C₁, 3C₂ soient rapportées de manière fixe à deux emplacements diamétralement opposés de chacun de ces orifices ;
- une partie de l'espace entre la partie thermosensible 5A₁ et les parois délimitant respectivement les passages 2C et 3C peut servir de logement pour un composant, notamment une partie du ressort de rappel 9, à condition que ce composant ne constitue pas une retenue significative pour l'écoulement de l'eau mélangée au niveau des passages 2C et 3C ;
- la partie thermosensible 5A₁ n'est pas nécessairement disposée en travers des passages 2C et 3C mais peut, en particulier pour une cartouche plus volumineuse, être totalement disposée à l'extérieur de ces passages ; et/ou
- d'autres éléments, accolés l'un à l'autre, de réglage de débit peuvent être utilisés à la place des disques en céramique 2 et 3, par exemple des systèmes à boule ou des plaques avec joints racleurs.

## Revendications

1. Cartouche thermostatique de régulation de fluides chaud et froid à mélanger, comprenant :
- un boîtier (1 ),
- un organe (4) de commande du débit du mélange des fluides chaud et froid,
- deux éléments (2, 3) de réglage des débits des fluides chaud et froid, qui comportent chacun un passage (2A, 3A) du fluide chaud, un passage (2B, 3B) du fluide froid et un passage (2C, 3C) du mélange des fluides chaud et froid et qui sont accolés l'un à l'autre de façon mobile, l'un (3) des éléments étant lié en rotation à l'organe de commande de débit (4) et l'autre (2) étant lié en rotation au boîtier (1), et
- des moyens de régulation thermostatique qui comportent un élément thermostatique (5) dont la partie thermosensible (5A₁) est située sur le trajet (F_{c}) d'écoulement du mélange,
**caractérisée en ce que** la section (S) d'écoulement du mélange des fluides chaud et froid à travers les éléments de réglage (2, 3), définie par la superposition des passages du mélange (2C, 3C) dans la zone d'accolement (P) des éléments de réglage (2,3), est variable en fonction de la configuration de l'organe de commande de débit (4) et **en ce que**, suivant la dimension de la partie thermosensible (5A₁) globalement parallèle à la direction (F_{c}) d'écoulement du mélange autour de cette partie, au moins la moitié environ de ladite partie thermosensible est située en aval de la zone d'accolement (P) des éléments de réglage (2, 3).

2. Cartouche suivant la revendication 1, **caractérisée en ce qu'**au moins les trois quarts de la partie thermosensible (5A₁) sont situés en aval de la zone d'accolement (P) des deux éléments de réglage (2, 3).

3. Cartouche suivant la revendication 1 ou 2, **caractérisée en ce que** la partie thermosensible (5A₁) de l'élément thermostatique (5) est disposée au moins partiellement en travers des deux passages du mélange (2C, 3C).

4. Cartouche suivant la revendication 3, **caractérisée en ce que** l'espace entre la partie thermosensible (5A₁) et les parois délimitant respectivement les deux passages du mélange (2C, 3C) est totalement libre.

5. Cartouche suivant l'une quelconque des revendications précédentes, **caractérisée en ce que**, lorsque l'organe de commande de débit (4) passe d'une première configuration de commande d'un premier débit, éventuellement nul, à une seconde configuration de commande d'un second débit supérieur au premier débit, la section (S) d'écoulement du mélange augmente et, lorsque l'organe de commande de débit passe de la seconde à la première configuration, cette section diminue.

6. Cartouche suivant l'une quelconque des revendications précédentes, **caractérisée en ce que** les éléments de réglage (2, 3) sont des disques accolés l'un à l'autre par une de leurs faces respectives, la zone d'accolement formant un plan (P) sensiblement perpendiculaire à la direction (F_{c}) d'écoulement du mélange dans leur passage du mélange (2C, 3C).

7. Cartouche suivant l'une quelconque des revendications précédentes, **caractérisée en ce que** chaque passage du mélange (2C, 3C) présente la forme d'un cercle tronqué de deux cordes (2C₁, 2C₂, 3C₁, 3C₂) sensiblement symétriques par rapport au centre de ce cercle, la distance (d) entre ces deux cordes étant de préférence sensiblement égale à la dimension de la partie thermosensible (5A₁) transversale à la direction (F_{c}) d'écoulement du mélange autour de cette partie.

8. Cartouche suivant l'une quelconque des revendications précédentes, **caractérisée en ce que** les passages du mélange (2C, 3C) sont délimités directement par les éléments de réglage correspondants (2, 3).

9. Cartouche suivant l'une quelconque des revendications 1 à 7, **caractérisée en ce que** les passages du mélange sont délimités par des pièces respectivement rapportées de manière fixe sur les éléments de réglage correspondants (2, 3).

10. Robinet mitigeur muni d'une cartouche thermostatique conforme à l'une quelconque des revendications précédentes.

## Claims

1. Thermostatic cartridge for the regulation of hot and cold fluids to be mixed, comprising:
- a housing (1),
- means (4) for controlling the flow rate of the mixture of hot and cold fluids,
- two elements (2, 3) for regulating the flow rates of the hot and cold fluids, each of which comprises a passage (2A, 3A) for the hot fluid, a passage (2B, 3B) for the cold fluid and a passage (2C, 3C) for the mixture of hot and cold fluids, which are movably arranged side by side with one another, one (3) of the elements being rotatably connected to the flow rate control means (4) and the other (2) being rotatably connected to the housing (1), and
- thermostatic regulating means which comprise a thermostatic element (5), the heat-sensitive part (5A₁) of which is located on the flow path (F_{c}) of the mixture,
**characterised in that** the cross-section (S) of flow of the mixture of hot and cold fluids through the regulating elements (2, 3), as defined by superimposing the mixing passages (2C, 3C) in the zone (P) of side-by-side arrangement of the regulating elements (2, 3), is variable as a function of the configuration of the flow rate control means (4) and **in that**, depending on the dimension of the heat-sensitive part (5A₁) which is generally parallel to the direction (F_{c}) of flow of the mixture about this part, at least about half of said heat-sensitive part is located downstream of the zone (P) of side-by-side arrangement of the regulating elements (2, 3).

2. Cartridge according to claim 1, **characterised in that** at least three quarters of the heat-sensitive part (5A₁) are located downstream of the zone (P) of side-by-side arrangement of the two regulating elements (2, 3).

3. Cartridge according to claim 1 or 2, **characterised in that** the heat-sensitive part (5A₁) of the thermostatic element (5) is located at least partly across the two passages for the mixture (2C, 3C).

4. Cartridge according to claim 3, **characterised in that** the space between the heat-sensitive part (5A₁) and the walls delimiting the two passages for the mixture (2C, 3C) is totally free.

5. Cartridge according to any one of the preceding claims, **characterised in that** when the flow rate control means (4) changes from a first configuration for controlling a first flow rate, optionally zero, to a second configuration for controlling a second flow rate greater than the first flow rate, the cross-section (S) of flow of the mixture gets bigger and, when the flow rate control means changes from the second to the first configuration, this cross-section gets smaller.

6. Cartridge according to any one of the preceding claims, **characterised in that** the regulating elements (2, 3) are discs coupled to one another by one of their respective sides, the zone of side-by-side arrangement forming a plane (P) substantially perpendicular to the direction (F_{c}) of flow of the mixture in the passages for the mixture (2C, 3C).

7. Cartridge according to any one of the preceding claims, **characterised in that** each passage for the mixture (2C, 3C) is in the form of a circle truncated by two chords (2C₁, 2C₂, 3C₁ 3C₂) substantially symmetrical relative to the centre of this circle, the distance (d) between these two chords preferably being substantially equal to the dimension of the heat-sensitive part (5A₁) at right-angles to the direction (F_{c}) of flow of the mixture about this part.

8. Cartridge according to any one of the preceding claims, **characterised in that** the passages for the mixture (2C, 3C) are directly delimited by the corresponding regulating elements (2, 3).

9. Cartridge according to any one of claims 1 to 7, **characterised in that** the passages for the mixture are delimited by parts which are respective fixedly added to the corresponding regulating elements (2, 3).

10. Mixer tap provided with a thermostatic cartridge according to any one of the preceding claims.

## Patentansprüche

1. Thermostatkartusche zur Regelung von zu mischenden heißen und kalten Flüssigkeiten, umfassend:
- ein Gehäuse (1),
- ein Element (4) zur Steuerung der Durchflussmenge des Gemisches aus heißen und kalten Flüssigkeiten,
- zwei Elemente (2, 3) zur Regelung der Durchflussmengen der heißen und kalten Flüssigkeiten, jeweils umfassend einen Durchgang (2A, 3A) für die heiße Flüssigkeit, einen Durchgang (2B, 3B) für die kalte Flüssigkeit und einen Durchgang (2C, 3C) für das Gemisch aus heißen und kalten Flüssigkeiten, und die beweglich aneinander befestigt sind, wobei eines (3) der Elemente drehfest mit dem Element zur Steuerung der Durchflussmenge (4) und das andere (2) drehfest mit dem Gehäuse (1) verbunden ist, und
- Mittel zur Thermostatregelung, umfassend ein Thermostatelement (5), dessen thermosensibler Teil (5A1) auf der Fließbahn (Fc) des Gemisches angeordnet ist,
**dadurch gekennzeichnet, dass** der Fließquerschnitt (S) des Gemisches aus heißen und kalten Flüssigkeiten durch die Regelelemente (2, 3), der durch die Übereinanderlagerung der Durchgänge des Gemisches (2C, 3C) in der Fügezone (P) der Regelelemente (2, 3) definiert wird, in Abhängigkeit von der Konfiguration des Elements zur Durchflusssteuerung (4) variabel ist, und dass gemäß der Abmessung des thermosensiblen Teils (5A1) global parallel zur Fließrichtung (Fc) des Gemisches um diesen Teil mindestens ungefähr die Hälfte des thermosensiblen Teils stromabwärts der Fügezone (P) der Regelelemente (2, 3) angeordnet ist.

2. Kartusche nach Anspruch 1, **dadurch gekennzeichnet, dass** mindestens drei Viertel des thermosensiblen Teils (5A1) stromabwärts der Fügezone (P) der beiden Regelelemente (2, 3) angeordnet sind.

3. Kartusche nach Anspruch 1 oder 2, **dadurch gekennzeichnet, dass** der thermosensible Teil (5A1) des Thermostatelements (5) mindestens teilweise durch die beiden Durchgänge des Gemisches (2C, 3C) hindurchgehend angeordnet ist.

4. Kartusche nach Anspruch 3, **dadurch gekennzeichnet, dass** der Raum zwischen dem thermosensiblen Teil (5A1) und den Wänden, die jeweils die Durchgänge des Gemisches (2C, 3C) begrenzen, völlig frei ist.

5. Kartusche nach einem der vorhergehenden Ansprüche, **dadurch gekennzeichnet, dass**, wenn das Element zur Steuerung der Durchflussmenge (4) aus einer ersten Konfiguration zur Steuerung einer ersten Durchflussmenge, die gegebenenfalls gleich Null ist, in eine zweite Konfiguration zur Steuerung einer zweiten Durchflussmenge, die größer als die erste ist, übergeht, der Fließquerschnitt (S) des Gemisches größer wird, und wenn das Element zur Steuerung der Durchflussmenge aus der zweiten in die erste Konfiguration übergeht, dieser Querschnitt kleiner wird.

6. Kartusche nach einem der vorhergehenden Ansprüche, **dadurch gekennzeichnet, dass** die Regelelemente (2, 3) mit einer ihrer jeweiligen Flächen aneinander gefügte Scheiben sind, wobei die Fügezone eine Ebene (P) bildet, die im Wesentlichen senkrecht auf die Fließrichtung (Fc) des Gemisches in ihrem Durchgang des Gemisches (2C, 3C) ist.

7. Kartusche nach einem der vorhergehenden Ansprüche, **dadurch gekennzeichnet, dass** jeder Durchgang des Gemisches (2C, 3C) die Form eines abgeschnittenen Kreises, der von zwei zum Mittelpunkt dieses Kreises im Wesentlichen symmetrischen Sehnen (2C1, 2C2, 3C1, 3C2) abgeschnitten ist, aufweist, wobei der Abstand (d) zwischen diesen beiden Sehen vorzugsweise im Wesentlichen gleich der Abmessung des thermosensiblen Teils (5A1) quer zur Fließrichtung (Fc) des Gemisches um diesen Teil ist.

8. Kartusche nach einem der vorhergehenden Ansprüche, **dadurch gekennzeichnet, dass** die Durchgänge des Gemisches (2C, 3C) direkt von den entsprechenden Regelelementen (2, 3) begrenzt sind.

9. Kartusche nach einem der Ansprüche 1 bis 7, **dadurch gekennzeichnet, dass** die Durchgänge des Gemisches von Teilen begrenzt sind, die jeweils fest an die entsprechenden Regelelemente (2, 3) angesetzt sind.

10. Mischarmatur, die mit einer Thermostatkartusche nach einem der vorhergehenden Ansprüche versehen ist.
